# EUROPEAN PATENT SPECIFICATION

(11) **EP 2 333 164 B1**
(45) Date of publication and mention of the grant of the patent: **20.05.2020**
(21) Application number: 10192563.4
(22) Date of filing: 25.11.2010
(51) Int. Cl.: E02F 5/10, E02F 5/12, E02F 3/06, E02F 5/02

(54) **Device for burying slender elements, such as cables, pipes, ropes, chains, ducts and the like**
Vorrichtung zum Vergraben von dünnen Elementen wie Kabeln, Leitungen, Seilen, Ketten, Rohren und dergleichen
Dispositif permettant d'enterrer des éléments élancés, tels que des câbles, conduits, cordes, chaînes et similaire

(30) Priority: 27.11.2009 IT FO20090008
(43) Date of publication of application: 15.06.2011
(73) Proprietor: Romboli, Roberto, 47121 Forlì FC (IT)
(72) Inventor: Romboli, Roberto, 47121 Forlì FC (IT)
(74) Representative: Modiano, Micaela Nadia

(56) References cited:
- CH-A- 324 052
- DE-B- 1 201 441
- FR-A1- 2 354 420
- FR-A1- 2 566 024
- JP-A- S55 122 929
- JP-A- 2007 181 433
- JP-A- 2007 239 262
- US-A- 3 354 660
- US-A- 5 586 399

## Description

The present invention relates to a device for burying slender elements, such as cables, pipes, ropes, chains, ducts and the like, which is in particular adapted to bury any type of cable, wire or pipe parallel to the surface of the terrain.

There is a very frequent need to bury, at a depth of a few centimetres, the electrical cable which delineates the working perimeter of robot lawnmowers, i.e. completely automated lawnmowers which are capable of freeing the owner of a garden from the task of cutting the grass,

In the same way there is often the need to dig furrows in order to bury any element (electrical cables, pipes for irrigation, signalling cables of underground systems, etc.). Obviously, once the excavation has been carried out, the need then arises to lay the element inside the furrow and, finally, to close the furrow, thus restoring the original integrity of the terrain.

There are already some machines on the market which perform the burying of cables, wires or pipes but their operation is not optimal, since the rigidity of the cutting element, a kind of ploughshare, does not allow the easy execution of curved paths and it is an obstacle to use in particularly hard terrains.

US-A-3354660 discloses a cable laying apparatus having a rotatable earth-cutting tool provided with spaced teeth arranged to avoid displacement of earth into the paths of travel of succeeding teeth, and means are provided to rotate the tool and to feed a cable and grouting material therethrough, as the tool advances through the earth and rotates in a predetermined direction.

JP-A-2007181433 discloses a ditcher equipped with a machine body connected to a tractor. A rotative ditching body for ditching field soil and forming a ditch in a field while rotating around a rotative center shaft line in the vertical direction is rotatably installed in the machine body. A rotation supporting frame is installed so as to be turnable by nearly 180 degrees around the rotative center shaft line. A soil-discharging body for discharging soil dug up by the rotative ditcher to the side and a packing body for packing a wall face part of a ditch are installed in the rotation supporting frame. Both of the soil-discharging body and the packing body can be changed over to a forward operation state for carrying out operation by forward traveling of a tractor and a backward operation state for carrying out operation by backward traveling of the tractor.

The aim of the present invention is to overcome the above mentioned drawbacks, by providing a device for burying slender elements, such as cables, pipes, ropes, chains, ducts and the like, in a manner that is exceptionally effective, rapid and simply.

The above aim is achieved by a device as defined in claim 1.

The device according to the invention is described hereinafter by way of non-limiting example with the aid of the accompanying drawings, wherein:
Figure 1 is a schematic sectional side view of a preferred embodiment of the device according to the invention;
Figure 2 is a horizontal cross-section view taken along the line X-X of Figure 1, with some positions of the device according to the invention during the rotation of which it is capable.

With reference to the figures, the reference numeral 1 generally indicates a device according to the invention, provided with appropriate grip means in order to allow its easy piloting by an operator.

The device 1 moreover comprises wheels for movement and an actuation motor which is preferably chosen among an internal combustion engine and an electric motor (the possible adoption of different possible drive elements is not excluded).

For the sake of simplicity of description and in view of the fact that they meet requirements which are already widespread in the sector of application of the present invention, these components are not shown in the figures.

The device 1 constitutes the machine-body itself, which comprises a chassis to which an excavation assembly 2 is directly connected. The excavation assembly 2 comprises a rotating cutting tool which is a rotating body 3 with a vertical axis.

The rotating body 3, which is actuated by the motor described previously, is shaped like a milling cutter: the rotation of the rotating body 3 brings the cutters of the milling cutter to cut into the terrain that is facing it, removing material in the process. The subsequent and continuous removal of material produces the formation (the excavation) of a furrow 5.

In order to ensure an optimal efficiency of the rotating body 3 (the milling cutter), such rotating body preferably rotates at a high speed, as a result creating, in the terrain, while the device 1 is advancing (in the direction indicated by the arrow in the figure), a channel or furrow 5 which has the same width as the milling cutter 3.

Coaxially with the rotating body 3 and above it there is a collar 6 which encases the chassis, surmounting the rotating body 3. In practice the collar 6 can rotate with respect to the chassis and therefore it behaves like a pivot.

An appendage 7 protrudes radially from the collar 6 and is shaped like a rudder (and therefore shaped substantially like a fin), which is designed to follow the rotating body 3 while the device is advancing and which has the lower part accommodated inside the furrow 5 so as to touch the bottom thereof while the device is advancing.

A duct 8 is stably fixed to the appendage 7 and is substantially parallel to the axis of rotation of the rotating body 3 in at least one of its portions and terminates in a lower region with a portion 8A which is oriented in the opposite direction with respect to the rotating body 3.

This makes it possible for a slender element 9 (any type of cable, cord, pipe, chain and the like), by unrolling from a reel which is conveniently hinged to the device 1 (and not shown in the figure), to pass inside the duct 8 and be laid on the bottom of the furrow 5.

As an alternative to or in addition to the tube 8, a wheel could be used which is suitably provided with a circumferential (peripheral) channel in order to keep the cable 9 on track while it is being laid on the bottom of the furrow 5.

The ability of the appendage 7 to idly rotate coaxially with the rotating body 3 implies that, irrespective of the route taken by the device and independently of the radius of curvature of the trajectory which is executed from time to time, the slender element 9 will be laid with the same ease on straight sections and on curved sections.

Moreover, a roller 11 with a horizontal axis is coupled behind the appendage 7 so as to close up the furrow 5 after the passage of the device 1 by pressing the earth that was pulled up by the milling cutter as rotating body 3 and so restoring the original integrity of the terrain. Moreover, the height of the roller 11 can be adjusted with respect to the rotating body 3 since it is supported by a fork 12, the vertical arm 12' of which is provided with a plurality of holes 12" from which to choose, in each case, the hole to position at a hole 10' which is provided on a guide 10 which is integral with the appendage 7 and parallel to the axis of rotation of the rotating body 3. This is in order to define, in each case, the depth at which the cable 9 is to be buried.

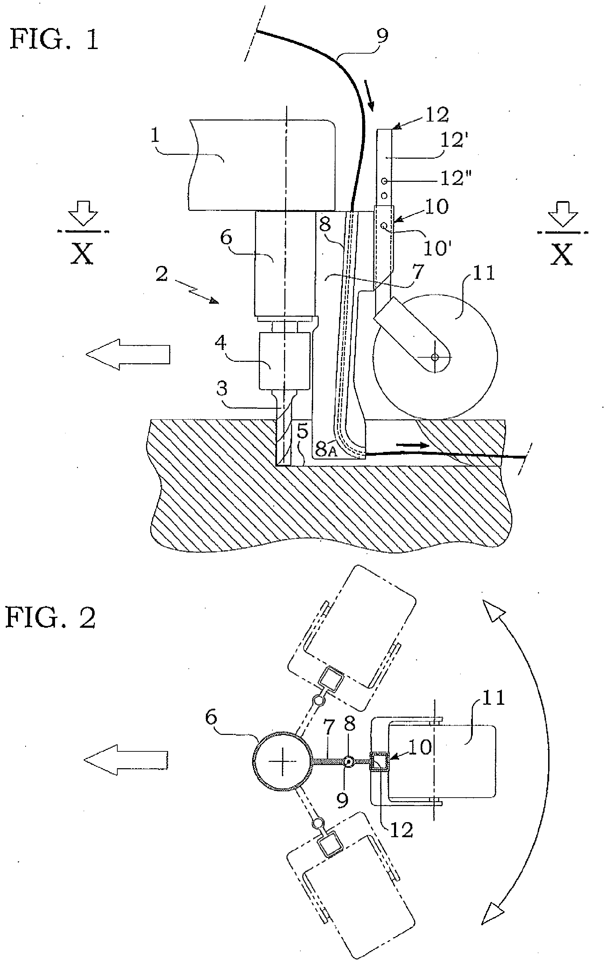

Figure 2 shows some positions of the excavation assembly 2 during the rotation of which it is capable: the appendage 7, which supports the duct 8 through which the slender element 9 passes, rotates idle about the axis of the rotating body 3 together with the roller 11, thus enabling the easy and quick burying of the slender element 9 irrespective of the route that the device 1 takes.

It is obvious that, without prejudice to the general characteristics illustrated and described, the present invention is susceptible of further modifications and variations which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for burying slender elements, such as cables, pipes, ropes, chains, ducts and the like, in a furrow (5), comprising a chassis, which is provided with manual control means for an operator for piloting it, the chassis carrying movement means, such as wheels and the like, and at least one cutting tool (3) which rotates about its own vertical axis, the cutting tool (3) being driven by a motor, and being further provided with suitable cutting edges,
the device being further provided with pivoting means (6, 7) for horizontal pivoting with respect to said vertical axis of said cutting tool (3),
the pivoting means (6, 7) being provided with an outlet for dispensing said slender element (9), said outlet being substantially aligned with the lower portion of said rotating cutting tool (3), and means (10) for adjusting the height of said pivoting means (6, 7) and of said rotating cutting tool (3) and therefore of the depth of the furrow (5) that is generated in the terrain by said rotating cutting tool (3) while said device (1) is advancing, **characterized in that** said pivoting means (6, 7) comprises a collar (6) which is coaxially hinged to the rotating cutting tool (3), said collar (6) being coupled to a rudder-shaped appendage (7) that has its lower part arranged substantially at the same level as the lower portion of said cutting tool (3), while the device is advancing (1), the lower portion of said rudder-shaped appendage (7) being accommodated inside the furrow (5) generated by said cutting tool (3).

2. The device according to claim 1, **characterized in that** said rudder-shaped appendage (7) comprises a duct (8) which terminates in a lower region, in proximity to the lower edge of said appendage (7), said duct (8) being provided with a portion (8A) which is oriented on the side opposite to the rotating cutting tool (3) and terminates with said outlet for dispensing a slender element (9) which is arranged slidingly inside said duct (8) and said portion (8A).

3. The device according to claim 2, **characterized in that** said means for adjusting the height (10) comprises a roller (11) which has a horizontal axis and can be coupled behind the appendage (7) according to a plurality of different stable configurations, which correspond to different heights with respect to the rotating cutting tool (3), for the purpose of defining, in each case, the depth at which to bury the slender element (9), the passage of said roller (11) also determining the closure of the furrow (5), after laying the slender element (9) with the earth left along the sides of the furrow (5) by the rotating cutting tool (3).

4. The device according to claim 3, **characterized in that** the roller (11) is supported by a fork (12), the vertical arm (12') of which is provided with a plurality of holes (12") for the selective alignment, in each case, with a hole (10') which is provided in a vertical guide (10) which is fixed to said appendage (7).

5. The device according to claim 2, **characterized in that** said appendage (7), at its lower region, accommodates, so that it can rotate, a wheel that has a peripheral furrow for the temporary accommodation of the slender element (9) which exits from said dispensing outlet, said wheel keeping said slender element (9) in an ideal arrangement with respect to the bottom of the furrow (5) in the moments immediately after its exit from said dispensing outlet.

6. The device according to claim 3, **characterized in that** said rotating cutting tool (3) is a milling cutter with a vertical axis,

## Patentansprüche

1. Eine Vorrichtung zum Vergraben von dünnen Elementen, wie Kabeln, Leitungen, Seilen, Ketten, Rohren und dergleichen, in einer Furche (5); ein Gestell umfassend, das mit manuellen Steuerungsmitteln für einen Bediener zum Steuern derselben ausgestattet ist, wobei das Gestell Bewegungsmittel, wie zum Beispiel Räder und dergleichen, und mindestens ein Schneidewerkzeug (3) trägt, das sich um seine eigene vertikale Achse dreht; wobei das Schneidewerkzeug (3) von einem Motor angetrieben ist und weiter mit geeigneten Schneidkanten ausgestattet ist,
wobei die Vorrichtung weiter mit Schwenkmitteln (6, 7) zum horizontalen Schwenken mit Bezug auf die vertikale Achse des Schneidewerkzeugs (3) versehen ist,
wobei die Schwenkmittel (6, 7) mit einem Ausgang zum Herauslassen des dünnen Elements (9) ausgestattet sind, wobei der Ausgang im Wesentlichen mit dem unteren Abschnitt des sich drehenden Schneidewerkzeugs (3) ausgerichtet ist; und Mitteln (10) zum Einstellen der Höhe der Schwenkmittel (6, 7) und des sich drehenden Schneidewerkzeugs (3) und damit der Tiefe der Furche (5), die in dem Gelände von dem sich drehenden Schneidewerkzeug (3) erzeugt wird, während sich die Vorrichtung (1) vorwärts bewegt; **dadurch gekennzeichnet, dass** das Schwenkmittel (6, 7) eine Hülse (6) umfasst, die koaxial schwenkbar mit dem sich drehenden Schneidewerkzeug (3) verbunden ist; wobei die Hülse (6) mit einem ruderförmigen Anhang (7) gekoppelt ist, dessen unterer Teil sich im Wesentlichen auf demselben Niveau befindet wie der untere Abschnitt des Schneidewerkzeugs (3); wobei der untere Abschnitt des ruderförmigen Anhangs (7) sich, während sich die Vorrichtung (1) vorwärts bewegt, in der von dem Schneidewerkzeug (3) erzeugten Furche (5) befindet.

2. Die Vorrichtung gemäß Anspruch 1, **dadurch gekennzeichnet, dass** der ruderförmige Anhang (7) einen Durchgang (8) umfasst, der in einem unteren Bereich, in der Nähe der Unterkante des Anhangs (7), endet; wobei der Durchgang (8) mit einem Abschnitt (8A) versehen ist, der auf der Seite gegenüber dem sich drehenden Schneidewerkzeug (3) ausgerichtet ist und in dem Ausgang zum Herauslassen eines dünnen Elements (9) endet, welches gleitend in dem Durchgang (8) und dem Abschnitt (8A) angeordnet ist.

3. Die Vorrichtung gemäß Anspruch 2, **dadurch gekennzeichnet, dass** das Mittel (10) zum Einstellen der Höhe eine Rolle (11) umfasst, die eine horizontale Achse hat und in einer Vielzahl verschiedener stabiler Konfigurationen, die verschiedenen Höhen im Verhältnis zu dem sich drehenden Schneidewerkzeug (3) entsprechen, hinter dem Anhang (7) angeschlossen werden kann, um in jedem Fall die Tiefe zu bestimmen, in welcher das dünne Element (9) vergraben werden soll, wobei der Lauf der Rolle (11) auch das Verschließen der Furche (5) nach dem Verlegen des dünnen Elements (9) mit der Erde bestimmt, die von dem sich drehenden Schneidewerkzeug (3) an den Seiten der Furche (5) liegen gelassen wird.

4. Die Vorrichtung gemäß Anspruch 3, **dadurch gekennzeichnet, dass** die Rolle (11) von einer Gabel (12) getragen ist, deren vertikaler Arm (12') mit einer Vielzahl von Löchern (12") für die jeweilige selektive Ausrichtung mit einem Loch (10') versehen ist, das in einer vertikalen Führung (10) angebracht ist, welche an dem Anhang (7) befestigt ist.

5. Die Vorrichtung gemäß Anspruch 2, **dadurch gekennzeichnet, dass** der Anhang (7) in seinem unteren Bereich ein Rad drehbar aufnimmt, das eine periphere Nut zur vorübergehenden Aufnahme des dünnen Elements (9) hat, das aus dem Ausgang austritt; wobei das Rad das dünne Element (9) in den Momenten direkt nach seinem Austritt aus dem Ausgang in einer idealen Anordnung im Verhältnis zum Boden der Furche (5) hält.

6. Die Vorrichtung gemäß Anspruch 3, **dadurch gekennzeichnet, dass** das sich drehende Schneidewerkzeug (3) ein Fräser mit vertikaler Achse ist.

## Revendications

1. Dispositif servant à enterrer des éléments élancés, tels que des câbles, tuyaux, cordes, chaînes, conduites et analogues, dans un sillon (5), comprenant un châssis qui est pourvu d'un moyen de commande manuelle permettant à un opérateur de le piloter, le châssis portant un moyen de déplacement, tel que des roues et analogues, et au moins un outil coupant (3) qui tourne autour de son propre axe vertical, l'outil coupant (3) étant entraîné par un moteur et étant en outre pourvu d'arêtes coupantes appropriées, le dispositif étant en outre pourvu d'un moyen de pivotement (6, 7) permettant un pivotement horizontal par rapport audit axe vertical dudit outil coupant (3), le moyen de pivotement (6, 7) étant pourvu d'un orifice de sortie servant à distribuer ledit élément élancé (9), ledit orifice de sortie étant sensiblement aligné avec la partie inférieure dudit outil coupant rotatif (3), et d'un moyen (10) servant à régler la hauteur dudit moyen de pivotement (6, 7) et dudit outil coupant rotatif (3) et en conséquence la profondeur du sillon (5) qui est généré dans le terrain par ledit outil coupant rotatif (3) pendant que ledit dispositif (1) est en train d'avancer, **caractérisé en ce que** le moyen de pivotement (6, 7) comprend un collier (6) qui est articulé de façon coaxiale sur l'outil coupant rotatif (3), ledit collier (6) étant accouplé à un appendice en forme de gouvernail (7) dont la partie inférieure est agencée sensiblement au même niveau que la partie inférieure dudit outil coupant (3), pendant que le dispositif est en train d'avancer (1), la partie inférieure dudit appendice en forme de gouvernail (7) étant logée à l'intérieur du sillon (5) généré par ledit outil coupant (3).

2. Dispositif selon la revendication 1, **caractérisé en ce que** ledit appendice en forme de gouvernail (7) comprend un conduit (8) qui se termine dans une région inférieure, à proximité du bord inférieur dudit appendice (7), ledit conduit (8) étant pourvu d'une partie (8A) qui est orientée du côté opposé à l'outil coupant rotatif (3) et se termine par ledit orifice de sortie servant à distribuer un élément élancé (9) qui est placé coulissant à l'intérieur dudit conduit (8) et de ladite partie (8A).

3. Dispositif selon la revendication 2, **caractérisé en ce que** ledit moyen de réglage de hauteur (10) comprend un rouleau (11) qui a un axe horizontal et peut être accouplé derrière l'appendice (7) selon une pluralité de configurations stables différentes, qui correspondent à des hauteurs différentes par rapport à l'outil coupant rotatif (3), dans le but de définir, dans chaque cas, la profondeur à laquelle l'élément élancé (9) sera enterré, le passage dudit rouleau (11) déterminant également la fermeture du sillon (5), après pose de l'élément élancé (9), avec la terre laissée le long des côtés du sillon (5) par l'outil coupant rotatif (3).

4. Dispositif selon la revendication 3, **caractérisé en ce que** le rouleau (11) est supporté par une fourche (12), dont le bras vertical (12') est pourvu d'une pluralité de trous (12") destinés à être alignés sélectivement, dans chaque cas, avec un trou (10') qui est ménagé dans un guide vertical (10) qui est fixé audit appendice (7).

5. Dispositif selon la revendication 2, **caractérisé en ce que** ledit appendice (7), au niveau de sa région inférieure, loge, de manière qu'elle puisse tourner, une roue qui présente un sillon périphérique destiné à loger temporairement l'élément élancé (9) qui sort dudit orifice de distribution, ladite roue maintenant ledit élément élancé (9) dans un agencement idéal par rapport au fond dudit sillon (5) aux moments immédiatement postérieurs à sa sortie par ledit orifice de distribution.

6. Dispositif selon la revendication 3, **caractérisé en ce que** ledit outil coupant rotatif (3) est une fraise à axe vertical.
